# EUROPÄISCHE PATENTANMELDUNG

(11) **EP 3 061 640 A1**
(43) Veröffentlichungstag der Anmeldung: **31.08.2016**
(21) Anmeldenummer: 16401011.8
(22) Anmeldetag: 19.02.2016
(51) Int. Cl.: B60K 17/04, B60K 7/00

(54) **PORTALRADANTRIEBSEINHEIT FÜR EIN LANDWIRTSCHAFTLICHES FAHRZEUG MIT PORTALACHSE**

(30) Priorität: 26.02.2015 DE 102015102746
(71) Anmelder: Amazonen-Werke H. Dreyer GmbH & Co. KG, 49205 Hasbergen (DE)
(72) Erfinder: Ehlen, Volker, 49205 Hasbergen (DE); Voth, Robert, 49163 Bohmte (DE); Hausmann, Carsten, 32657 Lemgo (DE)

(57) **Zusammenfassung**

Portalradantriebseinheit für ein landwirtschaftliches Fahrzeug mit Portalachse und einem Rahmen, wobei die Portalradantriebseinheit eine mit einem Laufrad verbundene Ausgangswelle eines Übersetzungsgetriebes und eine mit einer Antriebswelle einer Antriebseinrichtung verbundene Eingangswelle des Übersetzungsgetriebes aufweist, wobei das Übersetzungsgetriebe in einem Getriebegehäuse der Portalradantriebseinheit angeordnet ist, wobei die Portalradantriebseinheit über zumindest einen Tragschenkel mit dem Rahmen verbunden ist. Um eine möglichst schmal bauende und in sich abgeschlossene Radantriebseinheit zu schaffen, um Beschädigungen der schon sehr aufgewachsenen Pflanzen erheblich zu minimieren, ist vorgesehen, dass zwischen der Antriebswelle der Antriebseinrichtung und der Eingangswelle des Übersetzungsgetriebes ein den Abstand zwischen der Eingangswelle des Übersetzungsgetriebes und der Antriebswelle der Antriebseinrichtung überbrückendes Portalstirnrad angeordnet ist, dass das Portalstirnrad zumindest den oberen Bereich des Übersetzungsgetriebes nach oben überragt, dass das Antriebszahnrad der Antriebswelle der Antriebseinrichtung dem oberen Bereich des Portalstirnrades zugeordnet ist.

## Beschreibung

Die Erfindung betrifft eine Portalradantriebseinheit für ein landwirtschaftliches Fahrzeug mit einer Portalachse gemäß des Oberbegriffes des Patentanspruches 1.

Eine derartige Portalradantriebseinheit für ein landwirtschaftliches Fahrzeug mit Portalachse ist in DD WP 112 232 beschrieben. Bei diesem Fahrzeug ragen im Bereich des Rades Teile der Gabelachse sehr weit in den an sich freizuhaltenden Innenraum zwischen den Rädern hinein. Aufgrund der herausragenden Bauteile der Radantriebseinheit und Teile der Gabelachse werden beim Durchfahren eines höher aufgewachsenen Feldbestandes die Pflanzen zwischen den Rädern beschädigt.

Der Erfindung liegt die Aufgabe zu Grunde, eine möglichst schmal bauende und in sich abgeschlossene Radantriebseinheit zu schaffen, um Beschädigungen der schon sehr aufgewachsenen Pflanzen erheblich zu minimieren.

Diese Aufgabe wird erfindungsgemäß dadurch gelöst, dass zwischen der Antriebswelle der Antriebseinrichtung und der Eingangswelle des Übersetzungsgetriebes ein den Abstand zwischen der Eingangswelle des Übersetzungsgetriebes und der Antriebswelle der Antriebseinrichtung überbrückendes Portalstirnrad angeordnet ist, dass das Portalstirnrad zumindest den oberen Bereich des Übersetzungsgetriebes nach oben überragt, dass das Antriebszahnrad der Antriebswelle der Antriebseinrichtung dem oberen Bereich des Portalstirnrades zugeordnet ist.

Infolge dieser Maßnahmen wird eine im radnahen Bereich schmal bauende Radantriebseinheit für ein landwirtschaftliches Fahrzeug mit Portalachse geschaffen. Somit wird die Grundvoraussetzung dafür geschaffen, dass eine Beschädigung höher aufgewachsenen Pflanzen erheblich minimiert wird. Außerdem baut die erfindungsgemäße Portalradantriebseinheit sehr schmal und ermöglicht weiterhin einen stufenlosen Fahrantrieb und ein hohes antriebsseitiges Antriebsmoment. Durch die erfindungsgemäße Ausgestaltung kann die beispielsweise als hydrostatischer Antriebsmotor ausgebildete Antriebseinheit in einem erhöhten Bereich vor oder hinter Bauteilen der Portalachse angeordnet werden, so dass der Freiraum der Portalachse ohne Einschränkung erhalten bleibt. Somit wird eine Portalradantriebseinheit geschaffen, welche eine Beschädigung der schon höher aufgewachsenen Feldpflanzen zwischen den Rädern des landwirtschaftlichen Fahrzeugs im Betrieb erheblich verringert wird.

Um in einfacher Weise die einen größeren Bauraum beanspruchende Antriebseinheit in erfindungsgemäßer Weise vor oder hinter dem Bauteilen der Portalachse zur Schaffung des gewünschten Freiraumes anordnen zu können, ist vorgesehen, dass zwischen dem Antriebsart der Antriebswelle und dem Portalstirnrad zumindest ein Zwischenstirnrad angeordnet ist. Hierdurch kann in einfacher Weise der Abstand zwischen der Radachse und der erhöhten Anordnung des Antriebsmotors überbrückt werden.

Eine vorteilhafte Anordnung der Antriebseinrichtung wird dadurch erreicht, dass die Antriebseinrichtung zumindest annähernd auf Höhe des sich zumindest annähernd in horizontaler Richtung erstreckenden Bereiches des die Portalradantriebseinheit mit dem Rahmen verbindenden Tragschenkels angeordnet ist.

Um eine ausreichend hohe Gesamtübersetzung mit gleichzeitiger Überbrückung des Abstandes zwischen Radachse und Antriebseinheit zu erreichen, ist vorgesehen, dass das mit dem Laufrad über die Ausgangswelle verbundene Übersetzungsgetriebe der Portalradantriebseinheit als Planetengetriebe ausgebildet ist, dass das Portalstirnrad auf der Achswelle des Sonnenrades des Planetengetriebes drehfest angeordnet ist, dass das Hohlrad des Planetengetriebes mit der das Laufrad tragenden Nabe verbunden ist.

Weitere Einzelheiten der Erfindung sind der Beispielsbeschreibung und den Zeichnungen zu entnehmen. Die Zeichnungen zeigen
- Fig.1: Vergleichsdarstellung zwischen der Anordnung der Radantriebseinheit für ein landwirtschaftliches Fahrzeug nach dem Stand der Technik und der Erfindung in der Ansicht von vorne und in schematischer Darstellung,

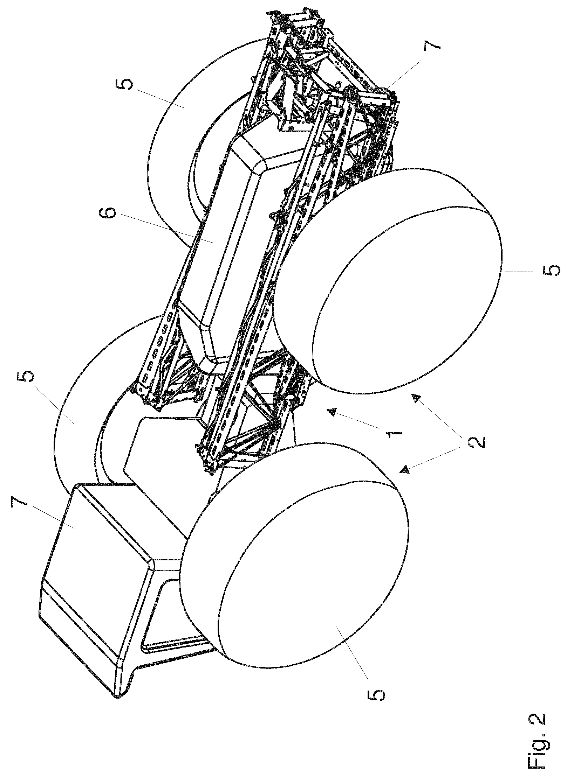

- Fig.2: ein landwirtschaftliches Fahrzeug in perspektivischer Darstellung und in Prinzipdarstellung,

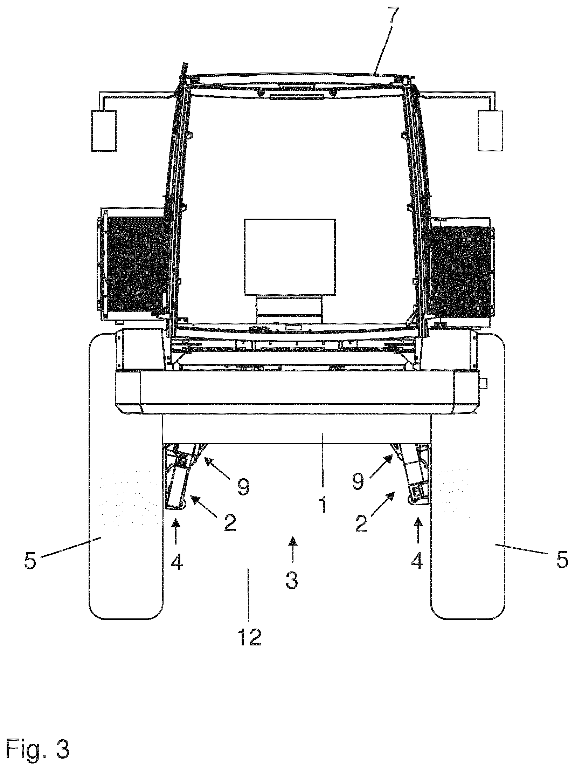

- Fig.3: das landwirtschaftliche Fahrzeug in der Vorderansicht und in Prinzipdarstellung,

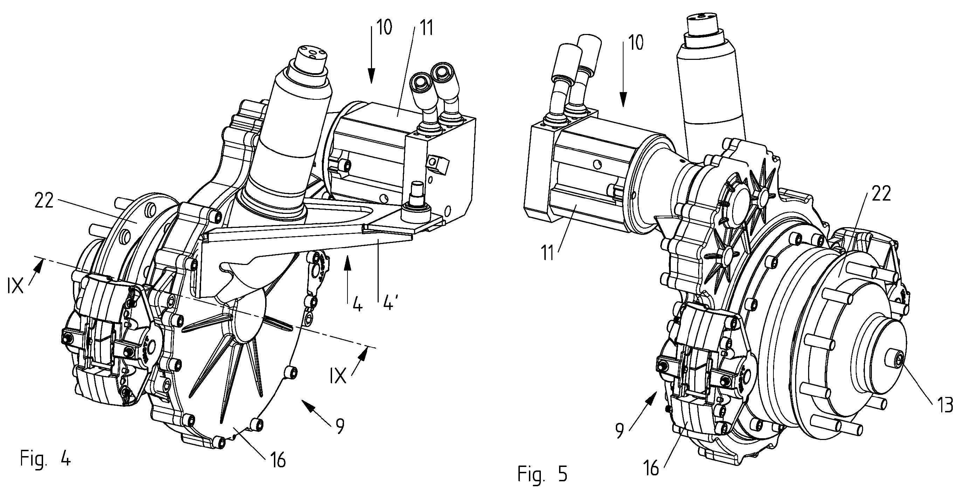

- Fig.4: die in Fahrtrichtung gesehene linke Radantriebseinheit in der Ansicht von vorne und in perspektivischer Darstellung,
- Fig.5: die in Fahrtrichtung gesehene linke Radantriebseinheit in der Ansicht von hinten und in perspektivischer Darstellung,

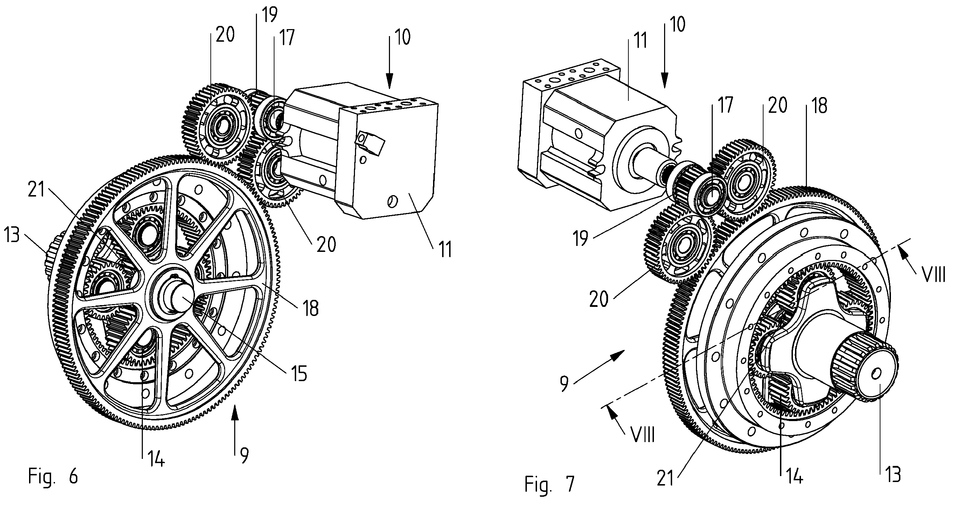

- Fig.6: die in Fahrtrichtung gesehene linke Radantriebseinheit in der Ansicht von vorne und in perspektivischer Darstellung ohne Getriebegehäuse und Achselemente,
- Fig.7: die in Fahrtrichtung gesehene linke Radantriebseinheit in der Ansicht von hinten und in perspektivischer Darstellung ohne Getriebegehäuse und Achselemente,

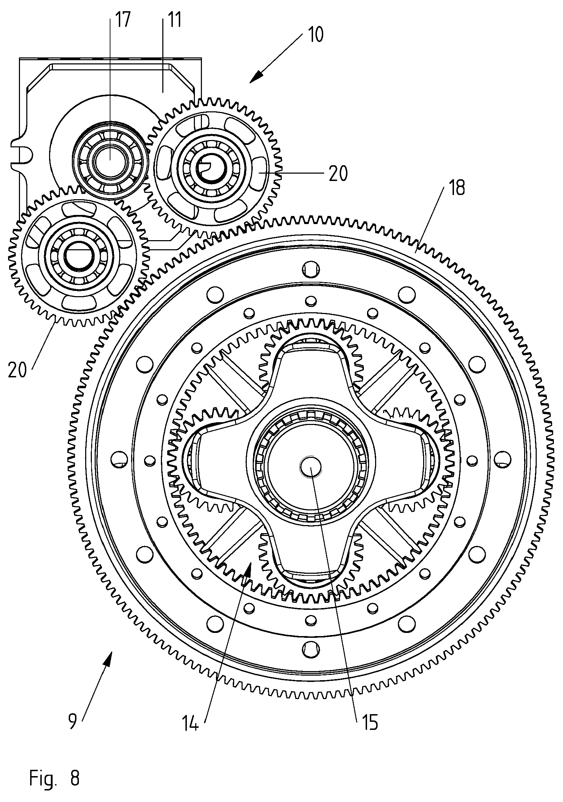

- Fig.8: die Getriebeausgestaltung der Radantriebseinheit in der Ansicht VIII -VIII und

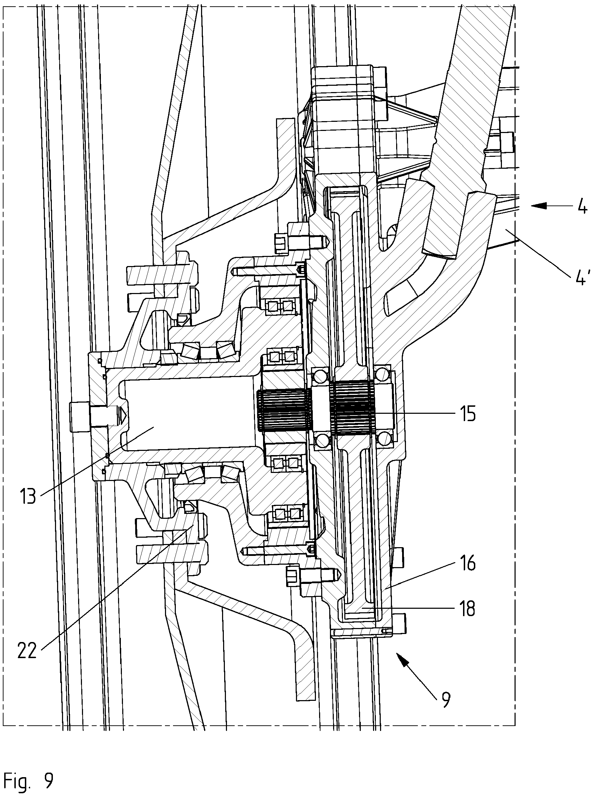

- Fig.9: die Radantriebseinheit im Schnitt IX - IX und Detailansicht.

Das als selbstfahrende Feldspritze ausgebildete landwirtschaftliche Fahrzeug weist einen Rahmen 1 auf, an dem ein Fahrgestell 2 mit einer Portalachse 3, entsprechenden Radaufhängungen 4 jeweils eine mit den Rädern 5 angeordnet ist. Auf dem Rahmen 1 sind unter anderem der Vorratsbehälter 6, die Fahrerkabine 7, Dosier- und Fördereinrichtung sowie ein Verteilergestänge 8 angeordnet. Den Radaufhängungen 4 sind Portalradantriebseinheit 9 zugeordnet. Diese Portalradantriebseinheiten 9 weisen jeweils eine Antriebseinrichtung 10, die beispielsweise als hydrostatischer Hydraulikmotor 11 ausgebildet ist, auf.

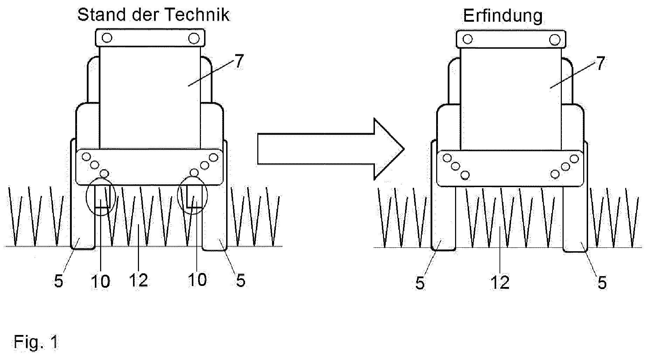

In der Fig.1 ist auf der linken Seite dieser Abbildung die Situation nach dem Stand der Technik und auf der linken Seite dieser Abbildung die Situation nach der Erfindung dargestellt. In der linken Abbildung der Fig.1 ist zu erkennen, dass die als Hydraulikmotor 11 ausgebildeten Antriebseinrichtungen 10 in den Raum 12 zwischen den Rädern 5 der Portalachse 3 hineinragen. In der rechten Abbildung der Fig.1 sind die Antriebseinrichtungen aus dem Raum 12 zwischen den Rädern 5 herausgebracht, wie im Folgenden noch erläutert wird.

Die jeweilige erfindungsgemäße Portalradantriebseinheit 9 weist eine mit dem Laufrad 5 verbundene Ausgangswelle 13 eines Übersetzungsgetriebes 14 und eine mit einer Antriebswelle 13 der als hydrostatischer Hydraulikmotor 11 ausgebildete Antriebseinrichtung 10 verbundene Eingangswelle 15 des Übersetzungsgetriebes 14 auf. Das Übersetzungsgetriebe 14 ist in einem Getriebegehäuse 16 der Portalradantriebseinheit 9 angeordnet. Die Portalradantriebseinheit 9 ist über zumindest einen Tragschenkel 4' der Radaufhängung 4 mit dem Rahmen 1 über Gelenke in geeigneter Weise und mit geeigneten Bauteilen verbunden ist. Zwischen der Antriebswelle 17 der Antriebseinrichtung 10 und der Eingangswelle 13 des Übersetzungsgetriebes 14 ist ein den Abstand zwischen der Eingangswelle 13 des Übersetzungsgetriebes 14 und der Antriebswelle 17 der Antriebseinrichtung 10 überbrückendes Portalstirnrad 18 angeordnet. Das Portalstirnrad 18 überragt zumindest den oberen Bereich des Übersetzungsgetriebes 14 nach oben überragt. Das Antriebszahnrad 19 der Antriebswelle 17 der Antriebseinrichtung 10 ist dem oberen Bereich des Portalstirnrades 18 zugeordnet, wie die Zeichnungen zeigen.

Durch die Anordnung ist die Antriebswelle 10 außerhalb des Freiraumes der durch die Portalachse 3 geschaffenen Freiraum 12 angeordnet. Die mögliche Beschädigung der Pflanzen ist erheblich verringert.

Zwischen dem Antriebsrad 19 der Antriebswelle 17 und dem Portalstirnrad 18 ist zumindest ein Zwischenstirnrad 20 angeordnet.

Die Antriebseinrichtung 10 ist zumindest annähernd auf Höhe des sich zumindest annähernd in horizontaler Richtung erstreckenden Bereiches des die Portalradantriebseinheit 9 mit dem Rahmen 1 verbindenden Tragschenkels 4' der Radaufhängung 4 angeordnet.

Das mit dem Laufrad 5 ist über die Ausgangswelle 13 verbundene Übersetzungsgetriebe 14 der Portalradantriebseinheit 9, ist als Planetengetriebe ausgebildet. Das Portalstirnrad 18 ist auf der Achswelle 13 des Sonnenrades des Planetengetriebes 14 drehfest angeordnet. Das Sonnenrad 21 des Planetengetriebes 14 ist mit der das Laufrad 5 tragenden Nabe 22 und der Welle 13 verbunden.

## Patentansprüche

1. Portalradantriebseinheit für ein landwirtschaftliches Fahrzeug mit Portalachse (3) und einem Rahmen (1), wobei die Portalradantriebseinheit (9) eine mit einem Laufrad (5) verbundene Ausgangswelle (13) eines Übersetzungsgetriebes (14) und eine mit einer Antriebswelle (13) einer Antriebseinrichtung (10) verbundene Eingangswelle (15) des Übersetzungsgetriebes (14) aufweist, wobei das Übersetzungsgetriebe (14) in einem Getriebegehäuse (16) der Portalradantriebseinheit (9) angeordnet ist, wobei die Portalradantriebseinheit (9) über zumindest einen Tragschenkel (4') mit dem Rahmen (1) verbunden ist, **dadurch gekennzeichnet, dass** zwischen der Antriebswelle (17) der Antriebseinrichtung (10) und der Eingangswelle (13) des Übersetzungsgetriebes (14) ein den Abstand zwischen der Eingangswelle (13) des Übersetzungsgetriebes (14) und der Antriebswelle (17) der Antriebseinrichtung (10) überbrückendes Portalstirnrad (18) angeordnet ist, dass das Portalstirnrad (18) zumindest den oberen Bereich des Übersetzungsgetriebes (14) nach oben überragt, dass das Antriebszahnrad (19) der Antriebswelle (10) der Antriebseinrichtung (10) dem oberen Bereich des Portalstirnrades (18) zugeordnet ist.

2. Portalradantriebseinheit nach Anspruch 1, **dadurch gekennzeichnet, dass** zwischen dem Antriebsrad (19) der Antriebswelle (17) und dem Portalstirnrad (18) zumindest ein Zwischenstirnrad (20) angeordnet ist.

3. Portalradantriebseinheit nach zumindest einem der vorstehenden Ansprüche, **dadurch gekennzeichnet, dass** die Antriebseinrichtung (10) zumindest annähernd auf Höhe des sich zumindest annähernd in horizontaler Richtung erstreckenden Bereiches des die Portalradantriebseinheit(9) mit dem Rahmen (1) verbindenden Tragschenkels (4') angeordnet ist.

4. Portalradantriebseinheit nach zumindest einem der vorstehenden Ansprüche, **dadurch gekennzeichnet, dass** das mit dem Laufrad (5) über die Ausgangswelle (13) verbundene Übersetzungsgetriebe (14) der Portalradantriebseinheit als Planetengetriebe (9) ausgebildet ist, dass das Portalstirnrad (18) auf der Achswelle (13) des Sonnenrades (21) des Planetengetriebes (14) drehfest angeordnet ist, dass das Rad (21) des Planetengetriebes (14) mit der das Laufrad (5) tragenden Nabe (22) verbunden ist.
